# EUROPEAN PATENT SPECIFICATION

(11) **EP 1 332 665 B1**
(45) Date of publication and mention of the grant of the patent: **12.12.2007**
(21) Application number: 03425019.1
(22) Date of filing: 16.01.2003
(51) Int. Cl.: A01G 3/053

(54) **Mechanical device with oscillating blades which may be moved on all the orthogonal planes**
Vorrichtung mit in allen orthogonalischen Plänen bewegbaren oszillierenden Klingen
Dispositif avec des lames oscillants qui peuvent être déplacées dans tous les plans orthoganaux

(30) Priority: 23.01.2002 IT RM20020028
(43) Date of publication of application: 06.08.2003
(73) Proprietor: Castelmani, Franco, 00025 Gerano (RM) (IT)
(72) Inventor: Castelmani, Franco, 00025 Gerano (RM) (IT)
(74) Representative: Banchetti, Marina

(56) References cited:
- EP-A- 0 687 409
- FR-A- 2 575 363
- US-A- 3 802 222
- US-A- 5 054 202
- US-H- H1 428

## Description

The invention concerns a mechanical device with oscillating blades which are moved in such a way that the operator can easily clear bushes and branches, cut grass and mow a lawn. The blades can be adjusted to work on all orthogonal planes so that the operator can reach any required position with respect to the areas to be cut.

As can be clearly seen, the most innovative aspect of this invention is the configuration of the mechanical device, for which a specific claim will be made below, since it may be used in mechanical devices which must be moved on orthogonal planes.

The invention may be classified in the technical sector of electromechanical devices and in the field of application of agricultural and garden tools.

Until now, automatic hedge trimmers and lawnmowers always included another tool. The operator removed the bevel gear pair installed on the most-commonly used machines in this sector and installed a mechanism fitted with blades which always had limitations for the performance of the work. In fact, the trimming of the upper sides of hedges was carried out with these machines with the operator in front of the hedge. This was very uncomfortable for the operator since he had to walk sideways without knowing were to place his feel, which could be dangerous and also lead to inaccurate trimming.

An example of a trimming device is described in EP687409A1. Said patent application relates to a hand held reciprocating blade type cutting device comprising a cutting blade and a rotatable shaft. Said cutting blade is connected to at least one cam track. Said cam track is circular and positioned eccentrically with respect to the axis of rotation of a gear element. The cutting device comprises also an arcuate cam follower which is located in the cam track to contact a segment of the inner face of the cam track, for driving engagement with the cutting blade.

The mechanical device covered by this invention, and subject of this request for a patent, is easily installed on the existing bevel gear pair of any trimmer. As explained below, as welle as moving at ground level, it enables, with the blades set at approximately 90°, all the operations for the vertical trimming of hedges as well as cutting to the top. This is carried out whilst walking along the sides of the hedge thereby guaranteeing safety for the operator and accuracy in the cutting operations.

The description of the invention given below only for illustrative purpose is based on a version of the device currently preferred by the inventor.

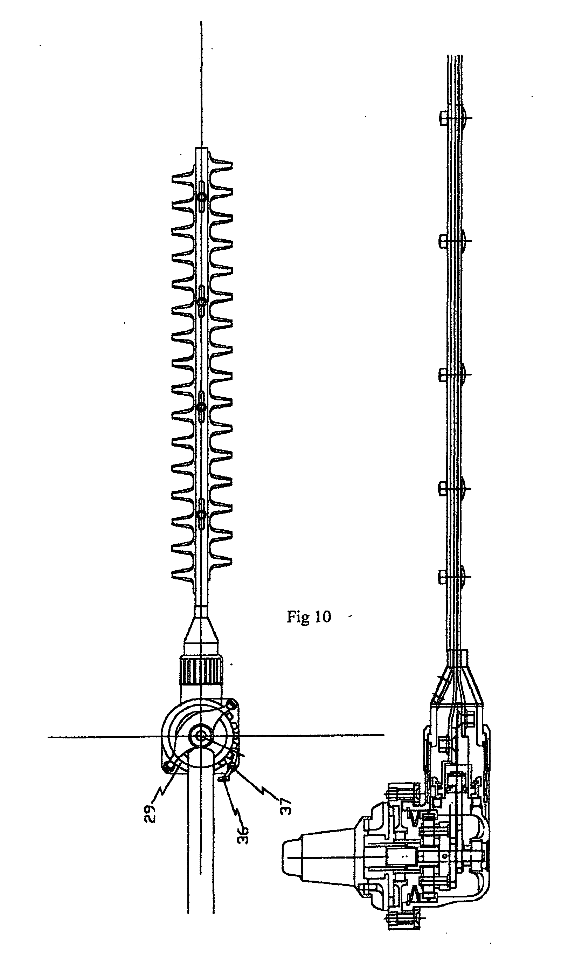

Reference should be made to the attached figures (Fig. 10 is shoen with the summary).

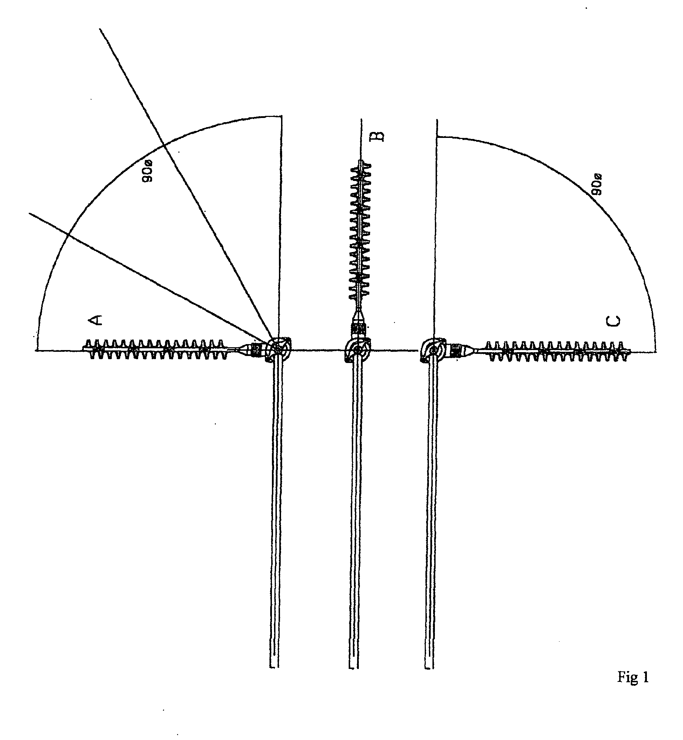

Fig. 1 - Schematic layout of mechanical device, in which a, b and c indicate some of the blade positions;

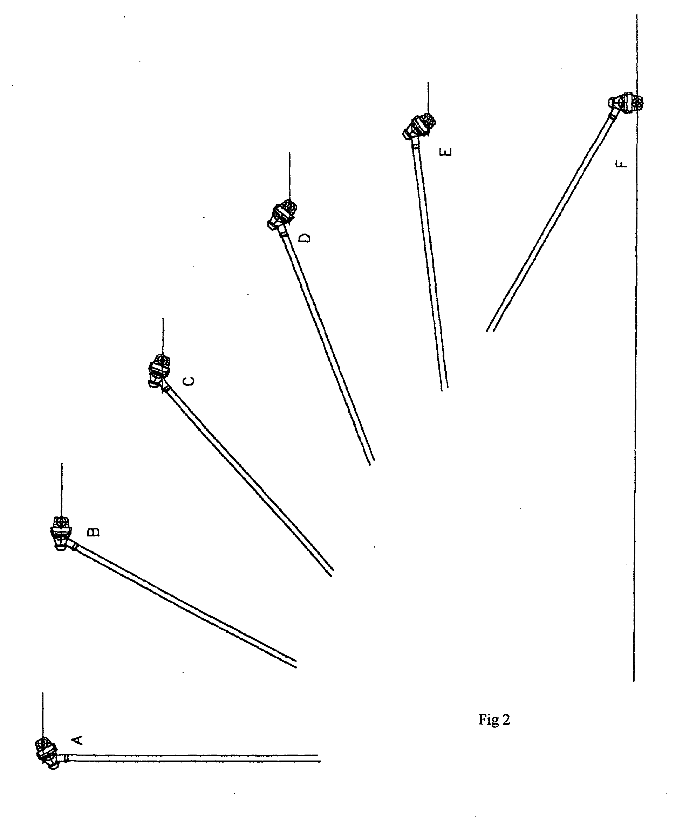

Fig. 2 - Schematic lyout of mechanical device, showing that blades may be set in any position: a, b, c, d, etc;
Fig. 3A - Schematic diagram of a blade;
Fig. 3B - Blade unit on adjustable support;
Fig. 4 - Cross-section of device;
Fig. 5 - Gear Box;
Fig. 6- Main body showing fixing points and adjustment device;
Fig. 7 - Gear box with clutch unit;
Fig. 8 - Epicycloidal gear unit with straight teeth;
Fig. 9 - Lower and upper oscillating rods;
Fig. 10 - Circular rack ratchet lock;

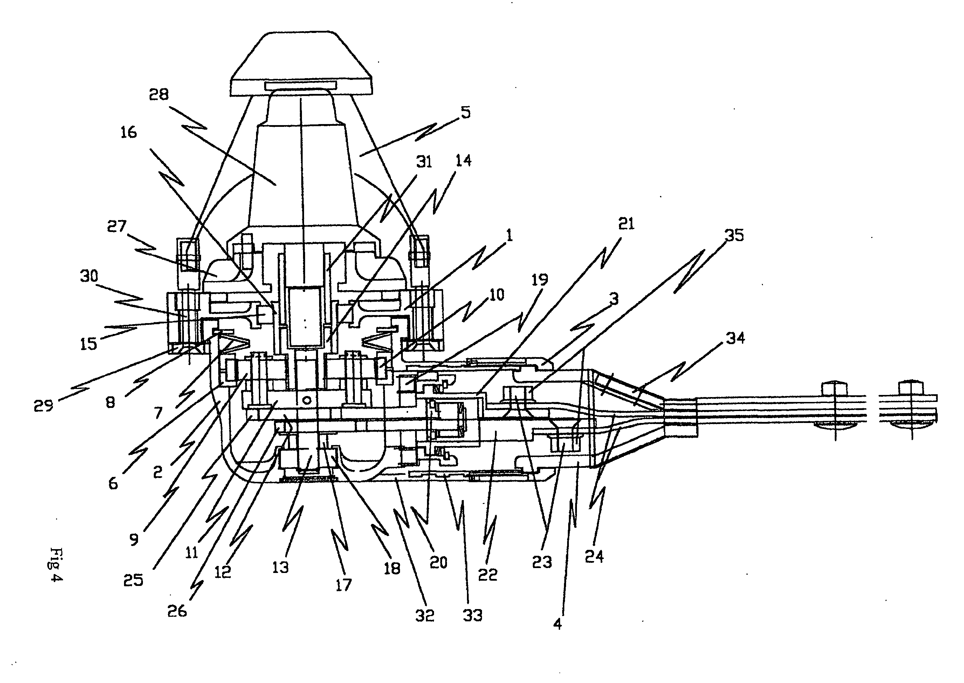

Fig. 4 shows a cross-section of the device, indicating:
   1. - main body with co-printed bearing;
   2. - gear box;
   3. - oscillating blade rotation lock ring;
   4. - blade and bar housing rotational support;
   5. - bell or flange-shaped bracket for fixing bevel gear pair;
   6. - limited slip clutch unit pre-loading ring, central unit and clutch rings;
   7. - disk spring for pre-loading clutch unit;
   8. - seger/ lock ring;
   9. - epicicloidal reduction gears;
   10. - reduction gear collar;
   11. - gear wheel support unit with transmission shaft secondary shaft coupling;
   12. - opposing rockers;
   13. - secondary transmission axis;
   14. - primary transmission axis with gearing;
   15. - bearing;
   16. - gearing connected to transmission axis;
   17. - spacer;
   18. - co-printed bearing on gear box;
   19. - oscillating unit with rotational joint upper and lower rods;
   20. - oscillating unit with rotational joint lower rod;
   21. - mobile unit with coupling to cutting bar and upper rod;
   22. - mobile unit with coupling to cutting bar and lower rod;
   23. - cutting bar fixing screws;
   24. - cutting bars;
   25. - upper rod;
   26. - lower rod;
   27. - adaptation washer to bevel gear pair;
   28. - standard bevel gear pair for a trimming machine;
   29. - support and alignment ring for oscillating unit gear box;
   30. - bell/flange bracket fixing screws;
   31. - ribbed joint for coupling mechanism and bevel gear pair;
   32. - oscillating unit housing;
   33. - printed insert on oscillating unit box;
   34. - oscillating blades support rod;
   35. - large-headed nuts to fix blades;

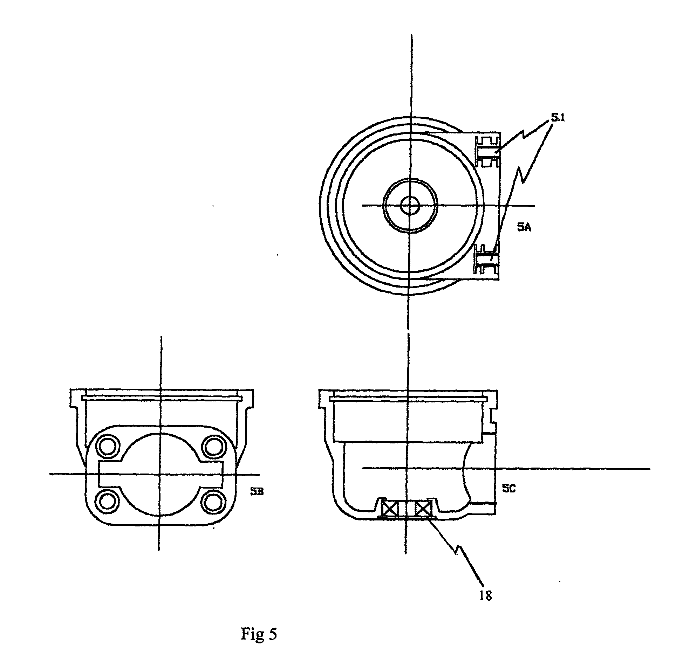

Fig. 5 shows the gear box, with:
   5a - view from above in which 5.1 indicates the inserts;
   5b - cross-section in which 5.1 indicates inserts;
   5c - side view in which 18 indicates the co-printed bearing;

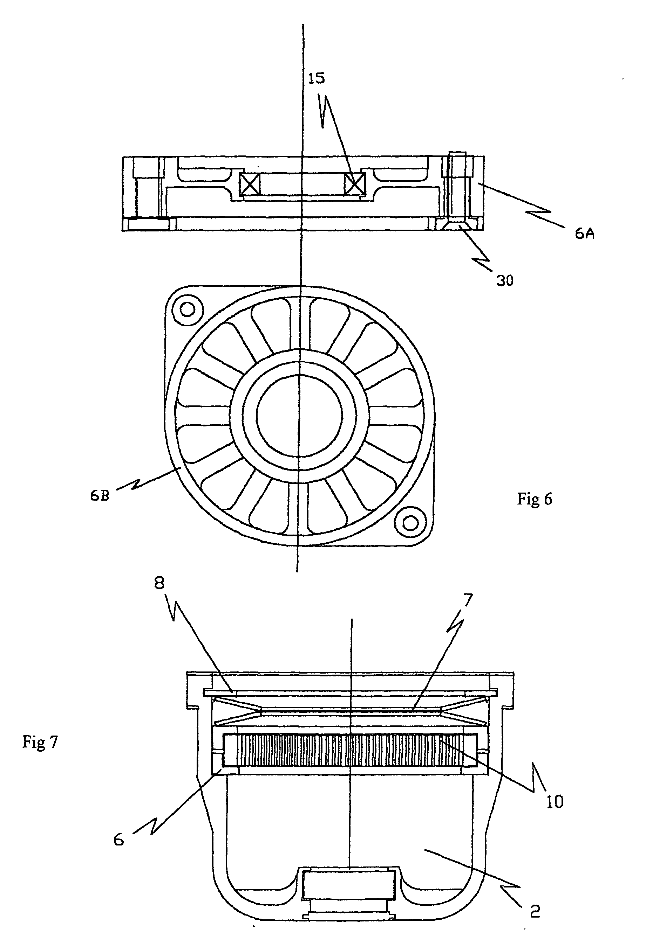

Fig. 6 shows the main body, with:
   6a - cross-section in which 15 is a bearing and 30 the lock screws;
   6b - view from above;
Fig. 7 shows the gear box 2, in which:
   6. - lock ring;
   7. - disk spring for pre-loading clutch unit
   8. - seger ring;
   10.- crown wheel;

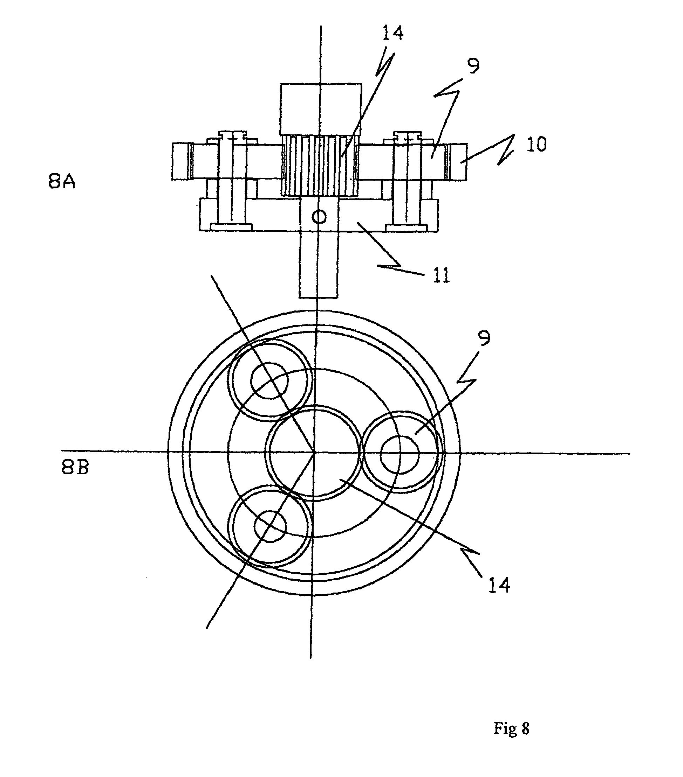

Fig. 8 shows the reduction unit, in which:
   8a is the cross-section in which:
   9. - three gear wheels;
   10. - reduction ring;
   11. - gear wheel housing unit;
   14. - primary transmission axis with gears, in which:
   8b is the view from above and 9 the gear wheels;

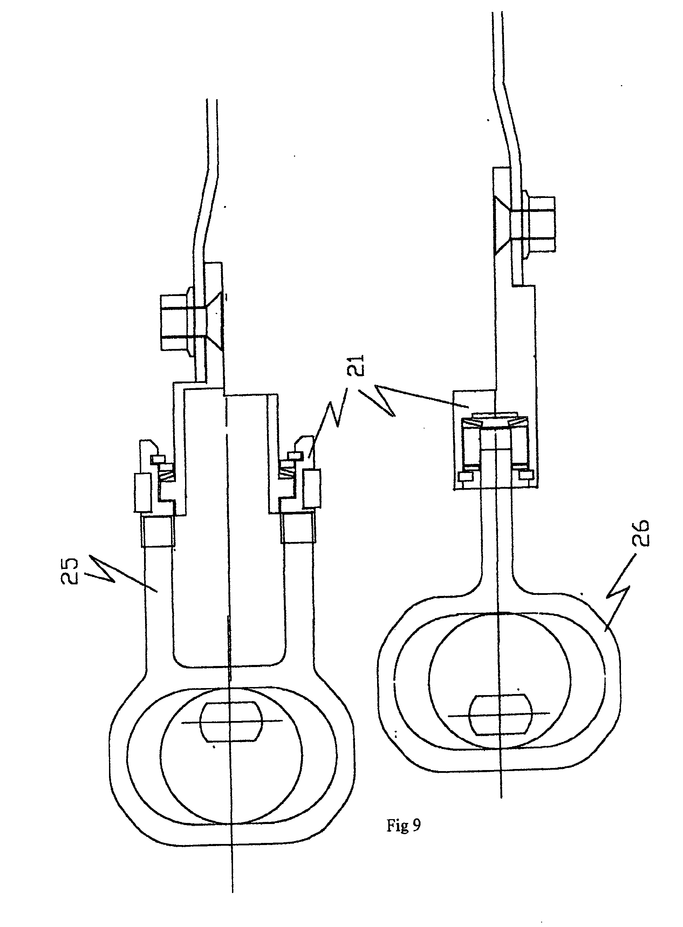

Fig. 9 shows:
   21. - mobile device;
   25. - upper oscillating rod;
   26. - lower oscillating rod;
Fig. 10 shows:
   29. - support and alignment ring for oscillating unit gear box;
   36. - Rack ratchet lock 29, fitted with spring 37.

### Operation of mechanism

The mechanism is powered by any type of trimming machine. By means of a primary transmission axis 14, 16, 31, the mechanism enters the reduction unit 9, 10 where the reduction ratio is applied. Collar 10 is held on two rings 6 pre-loaded by spring 7 held by seger 8. This all enables a controlled sliding of collar 10. This is necessary so that when the blade of the mechanism encounters a hard obstacle (e.g. metal wire) the unit starts to slide so that the collar 10 runs on the runners 6, thereby avoiding any damage to the mechanism, which would have blocked blades on one side and an operational motor on the other. The operator avoids the obstacle and returns to work.

The secondary shaft 13, which takes its movement from reduction unit 11, transmits the movement to two rocking cams 12.

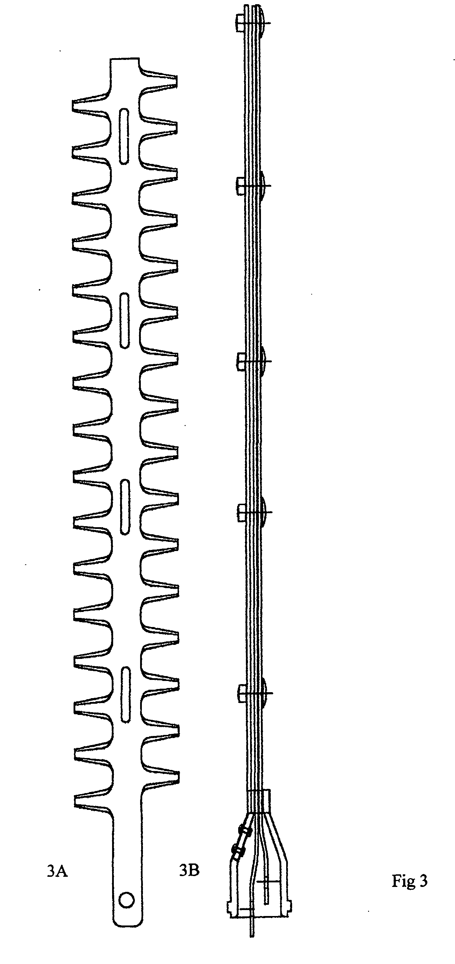

The rocking cams 12 are held in two rods 25 and 26 which reach the alternative movement in a coaxial rotational joint 21 and 20, where the rods 25 and 26 transfer the alternative movement regardless of the position of the rotating joint 21, 20. The blades 24 are fixed on the rotating joint 21, 20 by means of the screws 23. Since the blades are easily fixed they may be easily removed for maintenance purposes. In fact, the blade unit, as shown in Fig. 3, slides from the rotational unit which provides the transmission movement. All the parts with alternative movement are out of phase by 180° and balanced with each other in order to minimise the vibrations.

The movement on the horizontal plane, in order to adjust the mechanism at approximately 90° intervals is carried out by unlocking a ratchet fixed on collar 29 and releasing it in the desired position, usually by means of a pushbutton command.

The ratchet is composed of a lever on one side of which are the ratchets for locking support ring 29 and on the other side of which is a knob to unlock the clamp. The position is fixed by means of a spring 37 which holds the ratchet.

## Claims

1. A mechanical device including a trimming machine (28) said trimming machine (28) comprising a bevel gear pair, which is coupled to a primary transmission axis (31, 16, 14); a couple of toothed reciprocating blades (24); and an epicycloidal reduction unit (11), consisting of a reduction box gear (9) and a reduction collar (10), said reduction unit (11) being connected to said primary axis (31, 16, 14) and to a secondary transmission axis (13); **characterised in that** said trimming machine (28) comprises a main body (1) rotatably coupled to a gear box (2) by means of a ring (29), said ring being placed substantially on the plane orthogonal to said primary transmission axis (31, 16, 14); and a ratchet (36, 37), to which is coupled a spring, suitable to clamp said ring (29), said ratchet (36) further comprising a pushbutton by which it is possible to unlock the clamp of said ratchet (36) and said ring (29); and **in that** said gear box (2) comprises a pair of opposed rocking cams (12) connected to said secondary axis (13), said rocking cams 12 being held with an upper rod and a lower rod (25 and 26) which transfer the movement to a pair of coaxial rotational joints (20, 21) regardless of their position, each rotating joint (20, 21) being fixed to one of said toothed blades (24); so that said gear box (2) by means of said ring (29) can be rotated adjusting the position of said blades (24) in the plane passing through the transmission axis (31, 16, 14) to any angle, without interfering with the transmission of the movement by said rods (25 and 26) to said rotational joints (20, 21).

2. A mechanical device according to claim 1, **characterised in that** said blades (24) are fixed to said rotational joints (20, 21) by means of screws (23).

3. A mechanical device according to any of the preceding claim, **characterised in that** said collar (10) is held on two rings (6) pre-loaded by a spring (7) held by a lock ring (8), so that when the blades (24) encounter a hard obstacle that the collar 10 runs on the rings 6, thereby avoiding any damage.

4. A mechanical device according to any of the preceding claim, **characterised in that** said gear box (2) can be rotated adjusting the position of said blades (24) on said plane passing through the transmission axis (31, 16, 14) at 90 DEG intervals.

## Patentansprüche

1. Mechanische Vorrichtung, die eine Trimmmaschine (28) enthält, wobei die Trimmmaschine (28) umfasst: ein Kegelradgetriebepaar, das mit einer Primärübertragungsachse (31, 16, 14) gekoppelt ist; ein Paar hin- und hergehender Zahnklingen (24); und eine epizykloidische Untersetzungseinheit (11), die aus einem Untersetzungskastengetriebe (9) und aus einem Untersetzungskranz (10) besteht, wobei die Untersetzungseinheit (11) mit der Primärachse (31, 16, 4) und mit einer Sekundärübertragungsachse (13) verbunden ist; **dadurch gekennzeichnet, dass** die Trimmmaschine (28) einen Hauptkörper (1) umfasst, der mittels eines Rings (29) drehbar mit einem Getriebekasten (2) gekoppelt ist, wobei der Ring im Wesentlichen in der zu der Primärübertragungsachse (31, 16, 14) orthogonalen Ebene angeordnet ist; und eine Sperrklinkeneinrichtung (36, 37), mit der eine Feder gekoppelt ist, die geeignet ist, den Ring (29) festzuklemmen, wobei die Sperrklinkeneinrichtung (36) ferner einen Druckknopf umfasst, mit dem die Klemmung der Sperrklinkeneinrichtung (36) und des Rings (29) entsperrt werden kann; und **dadurch**, dass der Getriebekasten (2) ein Paar gegenüberliegender Schwingnocken (12) umfasst, die mit der Sekundärachse (13) verbunden sind, wobei die Schwingnocken (12) mit einem oberen Stab und mit einem unteren Stab (25 und 26) gehalten sind, die die Bewegung unabhängig von ihrer Stellung auf ein Paar koaxialer Drehgelenke (20, 21) übertragen, wobei jedes Drehgelenk (20, 21) an einer der Zahnklingen (24) befestigt ist; so dass der Getriebekasten (2) mittels des Rings (29) gedreht werden kann, um die Stellung der Klingen (24) in der durch die Übertragungsachse (31, 16, 14) gehenden Ebene auf einen beliebigen Winkel einzustellen, ohne die Übertragung der Bewegung durch die Stäbe (25 und 26) auf die Drehgelenke (20, 21) zu stören.

2. Mechanische Vorrichtung nach Anspruch 1, **dadurch gekennzeichnet, dass** die Klingen (24) mittels Schrauben (23) an den Drehgelenken (20, 21) befestigt sind.

3. Mechanische Vorrichtung nach einem vorherigen Anspruch, **dadurch gekennzeichnet, dass** der Kranz (10) an zwei Ringen (6) gehalten ist, die durch eine Feder (7) vorgespannt sind, so durch einen Sperrring (8) gehalten ist, so dass der Kranz (10) an die Ringe 6 anstößt, wenn die Klingen (24) auf ein hartes Hindernis auftreffen, wodurch eine Beschädigung vermieden wird.

4. Mechanische Vorrichtung nach einem vorherigen Anspruch, **dadurch gekennzeichnet, dass** der Getriebekasten (2) gedreht werden kann, um die Stellung der Klingen (24) in der durch die Übertragungsachse (31, 16, 14) gehenden Ebene in Intervallen von 90 Grad einzustellen.

## Revendications

1. Dispositif mécanique comprenant une machine d'ébarbage (28), ladite machine d'ébarbage (28) comprenant une paire de pignons coniques qui est couplée à un axe transmission primaire (31, 16, 14), un couple de lames dentées animées d'un mouvement de va-et-vient et un ensemble de réduction épicycloïdal (11) comprenant une boîte de vitesses de réduction (9) et un collier de réduction (10), ladite unité de réduction (11) étant reliée audit axe primaire (31, 16, 14) et à un axe de transmission secondaire (13), **caractérisé en ce que** ladite machine d'ébarbage (28) comprend un corps principal (1) couplé de façon rotative à une boîte de vitesses (2) au moyen d'une bague (29), ladite bague étant essentiellement placée sur le plan orthogonal audit axe de transmission primaire (31, 16, 14) et un rochet (36, 37) auquel est couplé un ressort, approprié pour serrer ladite bague (29), ledit rochet (36) comprenant, en outre, un bouton-poussoir au moyen duquel il est passible de déverrouiller le serrage dudit rochet (36) et de ladite bague (29) et **en ce que** ladite boîte de vitesses (2) comprend une paire de cames opposées basculantes (12) reliées audit axe secondaire (13), lesdites cames basculantes (12) étant maintenues avec une tige supérieure et une tige inférieure (25 et 26) qui transfèrent le mouvement à une paire de rotules de rotation coaxiales (20, 21) quel que soit leur position, chaque rotule rotative (20, 21) étant fixée à l'une desdites lames dentées (24) de sorte que ladite boîte de vitesses (2) au moyen de ladite bague (29) peut être tournée en ajustant la position desdites lames (24) dans le plan traversant l'axe de transmission (31, 16, 14) selon n'importe quel angle sans interférer avec la transmission du mouvement par lesdites tiges (25 et 26) auxdites rotules rotatives (20, 21).

2. Dispositif mécanique selon la revendication 1, **caractérisé en ce que** lesdites lames (24) sont fixée auxdites rotules rotatives (20, 21) au moyen de vis (23).

3. Dispositif mécanique selon l'une quelconque des revendications précédentes, **caractérisé en ce que** ledit collier (10) est maintenu sur deux bagues (6) préchargées par un ressort (7) maintenu par une bague de verrouillage (8) de sorte que quand les lames (24) rencontrent un obstacle dur, le collier (10) se déplace sur les bagues (6), évitant ainsi n'importe quelle altération.

4. Dispositif mécanique selon l'une quelconque des revendications précédentes, **caractérisé en ce que** ladite boîte de vitesses (2) peut être tournée en ajustant la position desdites lames (24) sur ledit plan traversant l'axe de transmission (31, 16, 14) aux intervalles DEG,
